(19)

Europäisches Patentamt

European Patent Office

Office européen des brevets

(11) **EP 4 160 482 A1**

(12) **EUROPEAN PATENT APPLICATION**

(43) Date of publication:
**05.04.2023 Bulletin 2023/14**

(21) Application number: **22190147.3**

(22) Date of filing: **12.08.2022**

(51) International Patent Classification (IPC):
*G06N 3/04* (2006.01)     *G06N 3/08* (2006.01)
*G06N 5/046* (2023.01)     *G06Q 20/40* (2012.01)

(52) Cooperative Patent Classification (CPC):
**G06N 3/042; G06N 3/045; G06N 3/0475;
G06N 3/048; G06N 3/084; G06N 3/088;
G06N 3/094; G06N 5/046; G06Q 20/4016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2021   PT 2021117496
11.11.2021   PT 2021117568
02.06.2022   US 202217831199
04.08.2022   EP 22188744**

(71) Applicant: **Feedzai - Consultadoria e Inovação
Tecnológica, S.A.
3030-199 Coimbra (PT)**

(72) Inventors:
• **RIBEIRO PEREIRA, RICARDO
3030-199 COIMBRA (PT)**

• **BONO, JACOPO
3030-199 COIMBRA (PT)**
• **APARÍCIO, DAVID
3030-199 COIMBRA (PT)**
• **ARAUJO, MIGUEL
3030-199 COIMBRA (PT)**
• **SILVA, MARIA INÊS
3030-199 COIMBRA (PT)**
• **ASCENSÃO, JOÃO TIAGO
3030-199 COIMBRA (PT)**
• **SANTOS RODRIGUES BIZARRO, PEDRO
GUSTAVO
3030-199 COIMBRA (PT)**

(74) Representative: **Patentree
Edificio Net
Rua de Salazares, 842
4149-002 Porto (PT)**

(54) **METHOD AND DEVICE FOR ASSESSING TRANSACTIONAL GRAPHS BASED ON GENERATOR-DISCRIMINATOR NETWORKS**

(57)     The present document discloses a method for training a machine-learning discriminator for assessing transaction graph samples, according to a predetermined objective function, the method comprising the steps of: training a generator network to generate transaction graph samples that optimize the predetermined objective function; generating transaction graph samples using the generator network; sampling non-generated transaction graph samples from a dataset of real transaction graph samples and feeding to a discriminator network; feeding the generated transaction graph samples to the discriminator network; discriminating the transaction graphs fed to the discriminator network as generated or non-generated, by using the discriminator network; training the discriminator network to detect whether the transaction graphs fed to the discriminator network are generated or non-generated. It is further disclosed a computer program product and computer system configured to carry out the disclosed method for training a machine-learning discriminator.

Fig. 1

**Description**

**TECHNICAL FIELD**

The present disclosure relates to a method and device for assessing transactional graphs, based on generator-discriminator networks, optionally using a differentiable rule-based proxy of a rule-based system.

**BACKGROUND**

In many real-world applications concerning the detection of illicit activities, fully labelled datasets are unavailable. This can, for example, be due to the incomplete detection of illicit activities, long investigation times of suspicious activities, etc. For example, money laundering investigations and subsequent criminal prosecutions can take years to complete, false social media accounts can escape detection, and illicit actors can continuously adapt their strategies.

Due to this lack of labelled datasets, it is impossible to train well-performing supervised machine learning models. A standard solution is to use rule-based detection systems instead. The rule-based systems are typically designed by domain experts but are characterised by a high false positive rate. Another possibility is to use unsupervised training techniques. These aim to discover different patterns in the data, which can then be analysed to distinguish between normal behaviour and outlier behaviour. Unsupervised techniques can also be problematic because mostly the criminal actors try to mimic legitimate activities to avoid detection.

Another alternative is to use generative models to create a labelled artificial dataset. For example, generative Adversarial Networks (GANs) focus on comparing the distribution of generated instances and the distribution of real instances via sampling and using an auxiliary parametric discriminator model. Using a small amount of labelled data is sufficient for a GAN to generate new (but artificial) examples of illicit activity, improving regular oversampling techniques. However, a small amount of labels is still required for this, and the generator cannot learn novel strategies beyond the ones present in the few labelled examples.

Notably, often the final objective of the illicit actors is known. For example, in the case of money laundering, criminal actors attempt to legitimise illegally obtained funds by concealing their origin, typically by using a complex network of financial transactions between various financial institutions and jurisdictions. In recommender systems, an illegal actor attempts to raise the rank of its product by creating false ratings through false accounts.

These facts are disclosed to illustrate the technical problem addressed by the present disclosure.

**GENERAL DESCRIPTION**

It is proposed a method using a generator network incorporating the known final objective of the illicit actor as an optimization objective to train an artificial generator of illicit activity. This artificial illicit activity is used to train an illicit activity detector. Hence, it is not required any labelled examples.

The present document discloses:

A tensor representation for connected graphs of money flows through accounts in a banking institution, internal accounts, incoming from several sender external accounts, and outgoing to several receiver external accounts;

A high-fidelity approximation to a system of anti-money laundering (AML) rules, rules proxy. This takes the tensor representation as input and outputs a real value corresponding to a decision. This rules proxy mapping is differentiable;

A deep learning generator network architecture mapping a high dimensional random noise vector sampled from a prespecified probability distribution to an instance of the tensor representation, henceforth denoted as "generated data". In particular, the architecture does not attribute any meaning to the ordering of accounts within each group of accounts, including internal accounts, sender external accounts, or receiver external accounts, but produces outputs that are consistent with the sequential nature of time;

A method for sampling connected graphs of transactions from a real dataset represented as instances of the tensor representation, henceforth denoted "real data". The purpose of this sampling is to provide examples of legitimate, non-money laundering data.

A deep learning discriminator network architecture mapping an element of the tensor representation to a probability of it being real or generated data. In particular, the architecture imposes permutation invariance on the output with respect to permutations within each group of accounts, including internal accounts, sender external accounts, or receiver external accounts.

An objective function that depends on the generator and noise distribution, as well as on the discriminator and real data distribution. The objective function contains the following sub-objectives, appropriately weighted by adjustable hyperparameters to control trade-offs:

a domain-knowledge defined money laundering objective for the generated data, e.g., favour the generation of graphs with large money flows and with little money blocked in internal accounts,
a penalty for generating data that triggers the proxy-rules system,
a penalty for generating data that is easy for the discriminator to distinguish from real data.

The objective function determines the optimal generator and discriminator. Originally, Generative Adversarial Networks (GAN) aim to make the generated data distribution indistinguishable from the real data distribution [1].

In an embodiment, additional terms in the objective shifts the focus of the generator to generate, instead, instances with a distribution close, but not equal, to the real data distribution while keeping the differences such that some money laundering is achieved while evading the rules system. Thus, in this design, the final discriminator has discriminative power, so it can be used to assign money laundering risk scores to graphs of transactions or rank sets of graphs from most to least risky.

The trade-off between how close the data is to the real data or how close it is to the money laundering objective is controllable by the hyperparameters of the objective function.

Managing this trade-off closely resembles a real-life scenario where malicious agents want to quickly sanitize dirty assets while avoiding behaviour that could be perceived as suspicious.

Internal and external accounts are used as an embodiment. In the present disclosure, it could be any set of accounts.

It is disclosed a method for training a machine-learning discriminator, i.e., an artificial neural network, for assessing transaction graph samples, according to a predetermined objective function, the method comprising the steps of:

training a generator network to generate transaction graph samples that optimize the predetermined objective function;
generating transaction graph samples using the generator network;
sampling non-generated transaction graph samples from a dataset of real transaction graph samples and feeding to a discriminator network;
feeding the generated transaction graph samples to the discriminator network;
discriminating the transaction graphs fed to the discriminator network as generated or non-generated, by using the discriminator network;
training the discriminator network to detect whether the transaction graphs fed to the discriminator network are generated or non-generated.

In respect to objective function optimization, an objective function is either a reward function (variously called a reward function, a profit function, a utility function, a fitness function, etc.), in which case it is to be maximized, or a loss function (variously called a cost function, an error function, etc.), in which case it is to be minimized. In the present disclosure, the objective function is assumed to be a reward function, but a loss function can also be used straightforwardly in the present disclosure.

Prior art systems are typically rule-based, capturing simple patterns, but resulting in high false-positive rates. Furthermore, many aspects of these prior art rule-based systems are set by regulators so the rules are publicly known. Thus, opponents will know the rules of these rule-based systems and will operate to bypass those rules [2, 3].

Prior art machine-learning solutions based on supervised learning require substantial amounts of labelled data [4], which often is unavailable (for example, in the money laundering domain where these behaviours are statistically minute and difficult to identify). Unsupervised methods can also be problematic because adversaries try to imitate legitimate behaviours in order to bypass those methods [5].

The present disclosure does not require labelled data. According to the present disclosure, the intent of adversaries can be known and thus can be modelled by incorporating it in the optimization objective, for example, money launderers will try to distance a destination of funds from their source in order to disguise a criminal origin.

Transactions include for example financial transfers between entities, ratings of items being reviewed by users, user-interface interactions by users, for example clicks from users in GUI elements, connections between user profiles in a social network platform, among other possibilities where entities are related by way of a 1-to-1 relationship.

In an embodiment, the method uses a differentiable pre-existing transaction-graph sample assessment system, wherein the generator network is trained to generate transaction graph samples that optimize the predetermined objective function and do not trigger detection by the differentiable pre-existing transaction-graph sample assessment system.

In an embodiment, each transaction graph sample is a graph where graph nodes represent entities, graph edges between graph nodes represent transactions between entities, and each graph edge has an associated transactional amount which aggregates the transactional amount for zero or more transactions between two entities represented by graph nodes for a predetermined time period.

In an embodiment, each transaction graph sample comprises a unipartite graph, comprising a single independent set of nodes, corresponding to transactional entities.

In an embodiment, the unipartite graph is stored as a tensor data record, the tensor being at least three-dimensional, where a first dimension of the tensor comprises the transactional entities, a second dimension of the tensor also comprises the transactional entities, a third dimension is a time dimension, and each tensor value is the associated transactional amount which has been aggregated from corresponding values of said three dimensions.

In an embodiment, each transaction graph sample comprises a bipartite graph, comprising two independent sets of nodes, a first set of nodes corresponding to a first set of transactional entities, and a second set of nodes corresponding to a second set of transactional entities.

In an embodiment, the bipartite graph is stored as a tensor data record, the tensor being at least three-dimensional, where a first dimension of the tensor comprises the first set of transactional entities, a second dimension of the tensor comprises the second set of transactional entities, a third dimension is a time dimension, and each tensor value is the associated transactional amount which has been aggregated from corresponding values of said three dimensions.

In an embodiment, each transaction graph sample comprises a tripartite graph, comprising three independent sets of nodes, a first set of nodes corresponding to external source transactional entities, a second set of nodes corresponding to internal transactional entities, and a third set of nodes corresponding to external destination transactional entities.

In an embodiment, the tripartite graph is stored as a tensor data record, the tensor being at least three-dimensional, where a first dimension of the tensor comprises the internal transactional entities, a second dimension of the tensor comprises the external source and destination transactional entities, a third dimension is a time dimension, and each tensor value is the associated transactional amount which has been aggregated from corresponding values of said three dimensions.

For example, the transactional entities can be bank accounts, internal and external, and the transactional amount is transferred funds. In another example, the transactional entities are users and items being rated by those users, and the transactional amount is the rating given by users to items. In yet another example, the transactional entities are users and items, and the transactional amount is the amount or value of items being bought and sold between users. The time dimension may be day or week, for example, the transactional amount being aggregated from hourly or daily data, respectively.

In an embodiment, the external source transactional entities and the external destination transactional entities of the second dimension of the tensor are non-overlapping in said second dimension.

In an embodiment, the time dimension is discretized according to a predetermined time duration, wherein the time dimension is split into non-overlapping contiguous time periods of said time duration.

In an embodiment, the predetermined time duration is the smallest time unit present in rules of the existing rule-based system.

In an embodiment, generating transaction graph samples using the generator network, comprises the steps of:

> inputting a one-dimensional source of random noise;
> upscaling the random noise input using a set of fully connected neural network layers into a one-dimensional upscaled random noise input;
> reshaping the one-dimensional upscaled random noise input into a coarse temporal tensor having an additional dimension than the graph tensor;
> applying to the coarse temporal tensor a set of transpose convolutional layers having transposed convolutional filters which are slidable across the time dimension for gradually obtaining a tensor with increased time granularity over the time dimension;
> removing the additional dimension by aggregating along the additional dimension of the tensor with increased time granularity into a generated tensor having the same dimensions as the graph tensor.

In an embodiment, generating transaction graph samples using the generator network further comprising, for transaction sparsifying when collapsing the additional dimension, the steps of:

> branching the tensor with increased time granularity into a probability tensor and an amount tensor;
> applying to the probability tensor and an amount tensor a set of transposed convolutional layers having transposed convolutional filters which are slidable across the time dimension for gradually obtaining a probability tensor and an amount tensor with increased time granularity over the time dimension;
> collapsing the additional dimension of the probability and the amount tensor with increased time granularity into a probability and an amount tensor having the same dimensions as the graph tensor;
> sampling the collapsed probability tensor where sampled tensor values are assigned the value of one with a probability defined by the respective tensor value in the collapsed probability tensor, and are otherwise assigned the value of zero;
multiplying the sampled tensor values by corresponding amounts from the collapsed amount tensor into a generated tensor.

In an embodiment, discriminating the transaction graphs fed to the discriminator network as generated or non-generated, by using the discriminator network, comprises the steps of:

applying to a fed transaction graph tensor a set of convolutional layers having convolutional filters which are slidable across the time dimension for gradually obtaining a tensor with decreased time granularity over the time dimension;
adding an additional dimension to the fed transaction graph tensor by a layer of said set of convolutional layers;
collapsing the additional dimension of the tensor with decreased time granularity into a collapsed tensor having the same dimensions as the graph tensor;
applying a permutation invariant aggregation to the collapsed tensor in respect of an order of one or more of the transactional entity dimensions;
reshaping the permutation invariant aggregated tensor into a one-dimensional feature vector;
using a set of fully connected neural network layers for predicting whether the fed transaction graphs is generated or non-generated.

In an embodiment, sampling a non-generated transaction graph sample from the dataset of real transaction graph samples comprises random walking said dataset by the steps of:

selecting a random seed node from the dataset of real transaction graph samples and adding the random seed node to the non-generated transaction graph sample;
repeatedly, selecting a neighbouring node of the currently selected node as a newly selected node, and adding the newly selected node to the non-generated transaction graph sample, except if a tensor dimension of the non-generated transaction graph sample corresponding to the neighbouring node is already complete.

In an embodiment, sampling a non-generated transaction graph sample from the dataset of real transaction graph samples comprises a breadth-first search of said dataset by the steps of:

selecting a random seed node from the dataset of real transaction graph samples as a currently selected node;
repeatedly, adding neighbouring nodes of the currently selected node to the back of a queue, removing a node from the front of the queue, selecting the removed node as the currently selected node, and adding the newly selected node to the non-generated transaction graph sample, except if a tensor dimension of the non-generated transaction graph sample corresponding to the neighbouring node or corresponding to the removed node is already complete.

In a further embodiment, sampling a non-generated transaction graph sample from the dataset of real transaction graph samples comprises a community detection algorithm, such as hierarchical clustering agglomerative algorithm by the steps of:

selecting a random seed node from the dataset of real transaction graph samples and growing a cluster of nodes from the dataset of real transaction graph samples as the non-generated transaction graph sample until any of the tensor
dimension of the non-generated transaction graph sample is complete;
or such as a hierarchical clustering divisive algorithm, by the steps of:
selecting a random seed node and a corresponding cluster of subgraph connected nodes from the dataset of real transaction graph samples;
thinning the cluster of nodes from the dataset of real transaction graph samples as the non-generated transaction graph sample until all of the tensor dimensions of the non-generated transaction graph sample are complete or less.

In an embodiment, transactions between internal transactional entities are disregarded in the aggregated transactional amount.
In an embodiment, the transactional amount is aggregated using a sum and/or an average and/or a count of transactional amounts of individual transactions.
In an embodiment, the differentiable pre-existing transaction-graph sample assessment system is a differentiable neural network proxy of a pre-existing rule-based transaction-graph sample assessment system.
In an embodiment, the training of the generator network and the training of the discriminator network is carried out in parallel or is carried in sequence, or is carried out iteratively in parallel or in sequence.

It is further disclosed a computer program product embodied in a non-transitory computer-readable medium comprising computer program instructions, which when executed by a computer processor, cause the computer processor to carry out the disclosed method for training a machine-learning discriminator.

It is also disclosed a computer system comprising a computer processor, configured to carry out the disclosed method for training a machine-learning discriminator.

It is further disclosed a computer program product embodied in a non-transitory computer-readable medium comprising computer program instructions, which when executed by a computer processor, cause the computer processor to carry out a machine-learning discriminator trained by the disclosed method.

## BRIEF DESCRIPTION OF THE DRAWINGS

The following figures provide preferred embodiments for illustrating the disclosure and should not be seen as limiting the scope of the invention.

**Figure 1:** Schematic representation of an embodiment of the disclosed method.

**Figure 2:** Schematic representation of an embodiment of a unipartite graph (A), respective codification (B), and tensor (C).

**Figure 3:** Schematic representation of an embodiment of a bi-partite graph (A), respective codification (B), and tensor (C), where Latin letters stand for a first entity kind (e.g., external) and Greek letters stand for a second entity kind (e.g., internal).

**Figure 4:** Schematic representation of an embodiment of a tri-partite graph (A), respective codification (B), and tensor (C) of interactions between accounts. In this particular example, Latin letters stand for internal accounts and Greek letters for external accounts (inbound and outbound).

**Figure 5:** Schematic representation of an example of using a convolution layer to calculate profiles.

**Figure 6:** Schematic representation of an embodiment of the full generator architecture.

**Figure 7:** Schematic representation of an embodiment of the categorical sampling operation.

**Figure 8:** Schematic representation of an embodiment of the full discriminator architecture.

**Figure 9:** Schematic representation of an embodiment of the permutation invariant aggregation.

**Figure 10:** Schematic representation of an embodiment of the second stage of the discriminator: enforce account permutation invariance.

**Figure 11:** Schematic representation of an embodiment of the expected learning trajectory given the $\Lambda_{flow}(x,y)$ objective function.

**Figure 12:** Graphic representation of the results from grid search of improved generator's hyperparameters.

**Figure 13:** Graphic representation of the results from fine-tuning the discriminator with various learning rate values.

**Figure 14:** Graphic representation of the results for the generator of the best-performing system.

**Figure 15:** Graphic representation of the Area Under ROC (AUC) curve for various discriminators on the test set.

## DETAILED DESCRIPTION

The present disclosure relates to a method and device for assessing transactional graphs, based on generator-discriminator networks, optionally using a differentiable rule-based proxy of a rule-based system. The disclosure can optionally focus on detecting particular behaviour or transactional patterns that escape rule-based systems.

In particular, the present disclosure also relates to the capture of suspicious money laundering behaviour. The disclosure can, optionally, focus on suspicious behaviour that escapes rule-based AML systems, among other types of suspicious activity. The set of transactions in a case to be analysed for money laundering detection is represented as, e.g., a tripartite graph, where a set of external accounts sends money to a set of internal accounts, which in turn sends part of the money to a set of external accounts, creating a money flow through the bank.

One of the advantages of the present disclosure is that real labelled cases, e.g., of money laundering are not required. Instead, it comprises a trainable data generator of money laundering examples that is encouraged to reproduce money laundering patterns from domain knowledge, e.g., maximize money flows, and optionally evade a rules-based AML system. Additionally, a discriminative model was trained to distinguish these generated fraudulent cases from real legitimate ones.

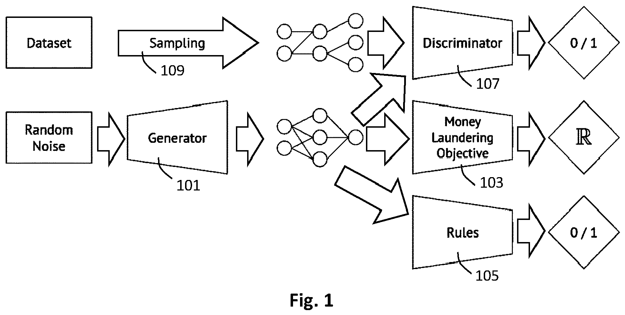

**Figure 1** shows a schematic representation of an embodiment of the disclosed method, where 101 represents a generator, 103 represents a money laundering objective function, 105 represents AML rules, 107 represents a discriminator, and 109 represents a dataset sampling.

A generator (101) is responsible for producing synthetic money laundering samples - represented in the middle of the figure as a tripartite graph. The generator's goal is to maximize a money laundering objective function, e.g., the amount of money flowing through the bank (103), optionally without being detected by a pre-existing AML rules system (105).

A discriminator is responsible for distinguishing generated samples from real data samples (107). The goal of the discriminator is to detect the synthetic samples, which mimic instances of money laundering.

A differentiable version of the rule-based system provides gradient information to the generator. In this way, the generator can learn to avoid triggering the rule-based system in specific embodiments.

A sampling strategy capable of selecting representative legitimate transactions (109) which, together with fake samples from the generator, are used to train the discriminator (107).

It is disclosed a data representation, as a tensor, of a graph of transactions connecting a set of internal accounts of a bank to external accounts that send or receive money. For example, layering, which, in the example of money laundering, is characterized by complex networks of transactions across different financial institutions. It was assumed that at least the following information regarding each transaction was available: the identification (id) of the sending account, the id of the receiving account, the amount being transferred, and the timestamp of the transaction. In the complex network of transactions, each bank only has records of transactions that involve its internal accounts Thus, from the point of view of a bank that is trying to detect money laundering, the types of transactions involved can be divided into three types: an external source account, sending money to an internal account, an internal account sending money to another internal account, and an internal account sending money to an external destination account. For the example of layering, the internal-internal transactions can be ignored since they are not informative.

A dynamic transaction graph can be represented using unipartite, bipartite, tripartite, or multipartite, depending on the use case. For example, the relevant transactions are represented as a tripartite graph, where a set of external accounts transfers money to a set of internal accounts, which transfers money to a set of external accounts. The edges in this tripartite graph represent transactions between the corresponding pair of accounts, and the weight of the edge is the amount transferred.

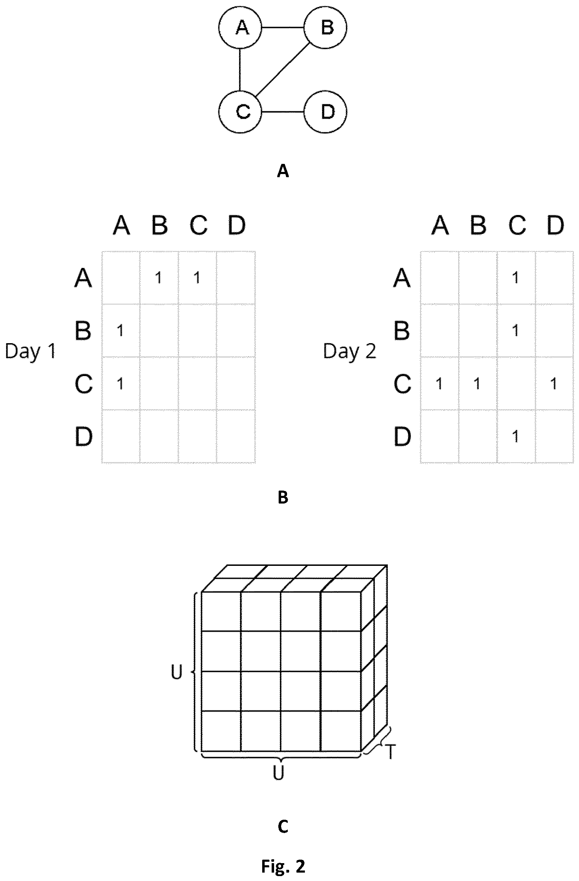

**Figure 2** illustrates a schematic representation of an embodiment of a unipartite graph (A), respective codification (B), and tensor (C). Table 1 below codifies this embodiment.

**Table 1:** example of transactions in a unipartite graph.

| Connections | Day |
|---|---|
| (A, B) | 1 |
| (A, C) | 1 |
| (A, C) | 2 |
| (B, C) | 2 |
| (C, D) | 2 |

A dynamic graph, which can be directed or undirected, weighted, or unweighted, is represented using a 3D tensor. Each index in the first two dimensions represents one of the entities involved, e.g., users in a social network platform.

The third dimension represents time and includes the temporal information regarding when the transaction was made. The period is broken down into non-overlapping contiguous time units, e.g., days. All the transactions between a given pair of entities, or accounts, that fall in the same time unit are merged and represented as a single edge with weight equal to an aggregation (e.g. sum, count, mean) of the amount in those transactions. For example, in the AML use case, the value in each edge is equal to the total amount transferred between the corresponding pair of accounts in that time unit.

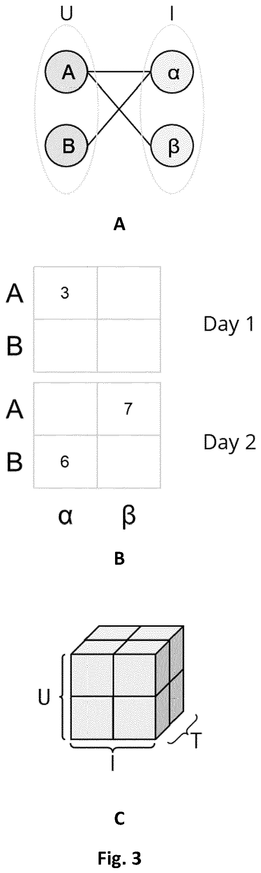

**Figure 3** illustrates a schematic representation of an embodiment of a bi-partite graph (A), respective codification (B), and tensor (C), where Latin letters stand for a first entity kind (e.g., external) and Greek letters stand for a second entity kind (e.g., internal). Table 2 below codifies this embodiment.

**Table 2:** an example of transactions in a bipartite graph.

| User | Item | Rating | Day |
|------|------|--------|-----|
| A | α | 3 | 1 |
| A | β | 7 | 2 |
| B | α | 6 | 2 |

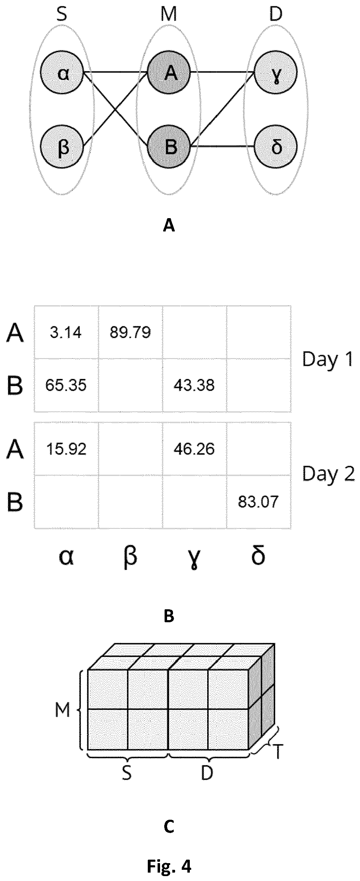

**Figure 4** shows a schematic representation of an embodiment of a tri-partite graph of interactions between accounts. Figure 4 (A) shows a graphic representation of a tripartite graph of interactions between accounts. Figure 4 (C) shows a representation as a 3D tensor. Latin letters stand for internal accounts and Greek letters for external accounts. Notice that there are no records of external-external transactions since that information is not available to the bank, and internal-internal transactions were ignored.

The graph can be multipartite; in this case, the representation can be more efficient by assigning subsets of entities to the tensor's first and second dimensions. For example, the graph can be bipartite, e.g., user-item interactions, assigning users to dimension 1 and items to dimension 2, Figure 3 (A), or tripartite, e.g., source - middle - destination accounts in a banking system, assigning middle accounts to dimension 1 and source and destination accounts to dimension 2, Figure 4 (A).

Table 3: an example of transactions.

| Source | Target | Amount | Day |
|--------|--------|--------|-----|
| α | A | 3.14 | 1 |
| α | A | 15.92 | 2 |
| α | B | 65.35 | 1 |
| β | A | 89.79 | 1 |
| A | B | 32.38 | 2 |
| A | γ | 46.26 | 2 |
| B | γ | 43.38 | 1 |
| B | δ | 32.79 | 2 |
| B | δ | 50.28 | 2 |

This specific representation avoids having to generate sequences of transactions with variable size or having to directly predict timestamps for each transaction. This way, it knows exactly the format of the data it generates and classifies, thus allowing any type of deep learning model to be used. Also, in specific applications, the AML rules have the smallest time unit, so there is no need to have a finer time granularity than that time unit.

Note that a specific tensor representation is discussed for this example with, e.g., the constraint that there are no transactions between internal accounts. However, more general representations are possible, e.g., by having internal accounts along the second dimension of the tensor side by side with the external accounts. Furthermore, different representations can be implemented for use-cases different than AML, as discussed above. What is required is that such representation is common to the output of the generator, of the sampling strategy, as well as the input of the discriminator, objective function, and, if applicable, the rules.

In this specific example of AML, this is a 3D tensor of non-negative real numbers with shape $(M, S + D, T)$, where the value of each entry is the amount of money being transferred between two corresponding accounts on the corresponding day.

It is described several options to obtain a differentiable proxy for the rules system.

This component is important for a rules-based AML system because one of the optimization ingredients of the generator is to avoid producing transactions that trigger the rules, since those transactions are already caught by the rules-based AML system, an improved system should focus on discriminating between money laundering that avoids such triggers and real data. In a way, the goal is to find the weak spots in the current AML system by generating synthetic money laundering data that can go undetected, and then train the discriminator to catch those money laundering strategies.

The generator can only learn to avoid triggering the rule-based AML system if it can get feedback on how the number of rule triggers changes as it adapts its parameters. The problem with directly using the rule-based solution is that it is not differentiable and therefore cannot provide gradient information in the backpropagation step, which is conventional for training deep neural networks.

Another neural network is trained to serve as a proxy for the rules to provide the required gradient information. The output of the generator is then input to this proxy network. In this way, if the generator's output triggers any scenario of the rule-based system, the proxy network provides gradient information to the generator on how to update its learnable parameters to avoid being detected again in the future.

The job of the proxy network is to label each internal account, each day, according to if it triggered any of the scenarios of money laundering. This proxy network receives a 3D tensor of shape $(M, S + D, T)$ as input and outputs a 3D tensor of shape $(M, R, T)$, where R is the number of rule scenarios to be mimicked. The entries in its output have a value 1 if the corresponding internal account triggered the corresponding rule scenario on the corresponding day, otherwise are 0. For example, suppose a given set of transactions would only trigger the third scenario because of transactions made by the second internal account on the seventh day. In that case, every entry of the output tensor should be 0, except for entry (1, 2, 6) which should be 1.

Another option is to output a tensor that simply predicts whether there was any rule triggered.

The network architecture is divided into two sequential blocks: profiling and prediction.

In the profiling block, the rule proxy network aggregates information from the input tensor to calculate profiles for each internal account. For example, one of the profiles extracted could be the sum of transaction amounts sent in the past 7 days. This is achieved using convolutional layers that slide across the second or third dimensions.

In the prediction block, the rule proxy network combines the profiling features to decide if they meet the required conditions to trigger each rule scenario. Again, having the profiles, each decision can be made independently, always using the same logic, for every point in time. As such, this can be implemented as convolutional layers that slide across the second dimension, always making the same combination of profiles to make the prediction.

To implement the network architecture described above, it is important to note that here the exact logic of the rules is known. Therefore, several options were considered to include inductive biases, based on such logic, to ease the convergence of the learning process. The first option is to have both the profiling and prediction blocks fully learnable, meaning that the network learns all the weights and biases from the examples, as in conventional supervised learning. The second option is to implement the logic of the profiling block, meaning that the first layers' parameters, weights, and biases are set to some fixed values that correspond to the calculation of the profiles used by the rule system while having the prediction block learnable. The third option is to manually implement the logic of the profiling and the prediction blocks.

In an embodiment of the rules proxy network, every parameter of the network is learnable, so it is only needed to tune hyperparameters, e.g., the number of layers and sizes of the kernels.

In the profiling block, some inductive bias may be introduced by choosing the dimensions for the convolutional filters to allow for combinations of the tensor components that the original rules would combine. For example, since it is known that the rules use profiles based on the total amount received or sent by an internal account, the filter sizes should match the number of source or destination accounts and never mix these two types of accounts. Furthermore, the sizes of temporal filters are also chosen as natural time intervals, e.g., one week, one month. The first layers extract profiling features with real meaning using combinations of these values as kernel sizes. The output of this set of layers is a $(M, F, T)$ tensor, where F is the number of features extracted from the input.

In the prediction block, convolutional layers with 1D kernels are used, with lengths equal to the number of features of the previous layer, that slide across the first and third dimensions of the tensor. The output of the proxy network is a $(M, R, T)$ tensor with the predictions.

Another option is to implement the profiling block manually, i.e., with fixed weights, and then have learnable layers in the prediction block. Using this architecture, the first few layers of the network are forced to calculate the same profiles that the rules use. As such, better predictive performance is expected since there are fewer parameters to learn and the information is optimally pre-processed.

For example, consider a case where, in the profiling block, to mimic the rules-based AML system, several combinations of total amounts and counts of transactions are needed, both coming from and going to external accounts, during various time periods. Starting from the original $(M, S + D, T)$ tensor, a $(M, F, T)$ tensor is obtained, where the second dimension, in this example F = 6, contains:

1. The number of incoming transactions,
2. The total dollar amount of incoming transactions,
3. The number of outgoing transactions,
4. The total dollar amount of outgoing transactions,
5. The number of transactions with round amounts,
6. The dollar amount of transactions with round amounts.

In an embodiment, the function $ReLU(2 \cdot siginoid(x) - 1)$ is used to map amounts into counts. Importantly, this is just one example, and there are various other ways to add count information. For example, one can also use a function to detach operations from the computational graph in the backward pass. In that way, one can map the non-zero amounts to 1 in the forward pass but keep the original amounts in the backward pass.

To count transactions, the $(M, S + D, T)$ tensor is copied, and the function is applied to each of its entries. This operation has the effect of mapping every entry with a positive amount to be close to 1 while leaving the empty ones unaltered. This function is a smooth version of the Heaviside step function. Note that the function $ReLU(2 \cdot sigmoid(x) - 1)$ is not essential, what is essential is that the gradient is non-zero for x > 0, and the level of smoothing can be adjusted to a specific application. This defines the smoothed-out versions of the count aggregations above.

To find the round amount transactions, i.e., transactions with an amount that is a multiple of 10000, the input tensor is copied, and the function $$ReLU\left(500\cos\frac{2\pi x}{10000} - 499\right)$$ is applied to each of its entries. This operation maps every real number to 0, except near the multiples of 10000 which have "hills" that peak at 1. The specific implementation of the smoothing is an example. With this function, the round amount entries can be selected by multiplying the corresponding result of the smoothed-out indicators applied to the amounts tensor by the amounts tensor. The smoothed out counts or sums are then followed by the sum of the corresponding smoothed round amounts or round indicators tensor over external accounts as appropriate.

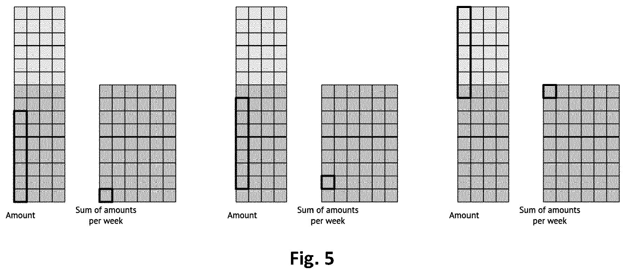

**Figure 5** shows a schematic representation of an example of using a convolution layer to calculate profiles.

The next aggregation in the profiling is over the desired time windows, e.g., one week, two weeks, one month, six months, and ten months. Each of them can be implemented as a convolution filter of the desired size, moving along the third dimension of the $(M, F, T)$ tensor. Notice that to keep the temporal dimension the same size, it is required to pad the tensor in one side, with a number of entries equal to the length of the kernel minus 1. In this example, this results in a $(M, 30, T)$ tensor, 6 features times 5 time windows.

2 extra features are added to signal the padding of the biggest time filters since some of the rule scenarios are based on averages, and the padding zeros may skew these values unknowingly. So, 2 features are added with 1's in the last six/ten months, signalling padding, and 0's elsewhere, to mark the days that may be affected by padding values. The output of this set of layers is a $(M, 22, T)$ tensor.

Next, in the prediction block, the same learnable layers architecture is used as the fully learnable network. The output of the proxy network is a $(M, R, T)$ tensor with the predictions.

Lastly, the rules are implemented completely inside a neural network with fixed parameters. This is the most complex solution to implement since it requires manually choosing and fixing all the weights and biases for all operations inside the network. However, if done correctly, it should yield labels very identical to the original rules without requiring any type of training.

In the profiling block, are used the steps as described in the semi-learnable architecture.

In the prediction block, the profiles are combined in order to mimic the logic behind each rule scenario. The conditions of the rule scenarios can typically be expressed as linear combinations of the profiles that have already been calculated. So, by choosing carefully the weights and biases of the convolution filters, like the ones used before in the learnable layers, and using a ReLU activation function [6], the triggers of each condition in one layer are calculated. Positive values correspond to the smoothed-out version of the original condition being met (1), otherwise, a 0 value corresponds to the condition not being met.

Then these conditions are combined using logic operations of conjunctions and disjunctions. The disjunction operation is straightforward to implement, one can just add the values corresponding to the conditions. If at least one of the conditions of the proxy rules is met, then the corresponding output is positive. Since these values are always non-negative, then the sum is positive, which translates to a trigger, effectively implementing a disjunction.

The conjunction is a bit more complex. One solution is to use the minimum operation, which has the desired behaviour of being positive if all conditions are positive. This option has the property that the gradient only flows through the entries of the tensor that are responsible for the minimum value. This can be a good property because, if there is a situation where, for example, the amount is substantially above its threshold, but the number of transactions is just slightly above its threshold, then the generator can learn to not trigger this rule scenario by creating examples with fewer transactions but with the same total amount. However, this highly targeted feedback can cause the generator to output transactions with a larger variation of amounts or that trigger the rules more often and make the training process of the generator more unstable.

Another solution to implement the conjunction operation is to use a function that removes operations from the computational graph when doing backpropagation. We will refer to such a function as the detach function. Using this, different behaviours can be obtained during the forward and the backward pass. For example, to implement $x \wedge y$, one writes $(min(x, y) - (x + y)).detach() + (x + y)$. In the forward pass, the $(x + y)$ terms cancel out, and the previous solution is left. However, in the backward pass, the detached part is ignored, and an addition that distributes the gradient fairly is left.

The generator is the part of the disclosed architecture that is responsible for generating artificial money laundering examples. Recall that the data format that is used to represent the transactions, i.e., the format of the output of the generator, is a tensor, in particular, for this example, it is a 3D tensor of shape $(M, S + D, T)$. The first dimension runs over the set of internal accounts, the second dimension runs over the external accounts, and the third dimension runs over the set of time steps. Each entry of the tensor is either 0, no transaction, or the value of the amount transferred.

One important remark is that the shape of the output tensor is fixed. This allows the use of convolutional layers instead of a recurrent neural network architecture but imposes a restriction on the size of the generated patterns. As such, the money laundering patterns that the generator creates have an upper bound on the number of accounts and time span of the transactions.

The generator architecture is composed of three main blocks: (1) a block of dense layers, gradually mapping a noise vector to a coarse temporal representation of interactions between accounts, (2) a block of transposed convolutional layers, gradually refining the temporal representation of interactions between accounts up to a single day, and (3) a block of transformations that is responsible for ensuring the sparsity of the tensor and make the number of transactions independent from the amount.

Finally, the output can also be scaled by a constant amount in order to speed up training. Since the model starts with small random values for its parameters, it would take several epochs before learning to generate a high amount of transactions in a stable way. So, this last step of the generator of multiplying its output by a constant amount larger than 1 can be beneficial. Other operations, such as exponentiating or taking logarithms, can also be used in various use-cases.

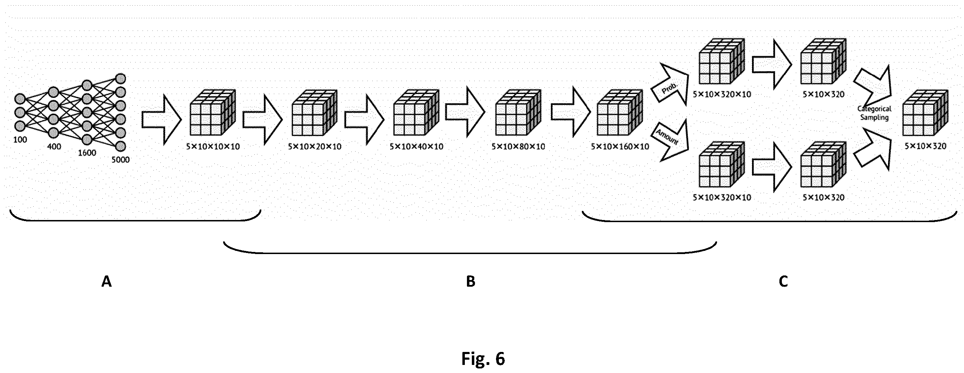

**Figure 6** shows a schematic representation of an embodiment of the full generator architecture comprising a first stage of generator (A) to map noise to coarse temporal tensor, second stage of the generator (B) to increase time granularity, and a third stage of the generator (C) to make the tensor sparse.

One of the objectives is to be able to create complex patterns of money laundering that involve multiple accounts that act together in an organized way. As such, the present generator needs to be able to coordinate transactions between all different pairs of accounts. Because of this, typical GAN architectures for image generation based on convolutions are not a good fit since, in this use case, there is no clear notion of locality, whereas, in image generation, neighbouring pixels tend to be similar. In fact, in this example where a 3D output tensor is used, the order of internal accounts, the first dimension, and external accounts, the second dimension, does not bear, a priori, any meaning. Only the third dimension, which is encoding the timestamp of the transactions, has a clear ordering and could potentially show, for example, some seasonal behaviour.

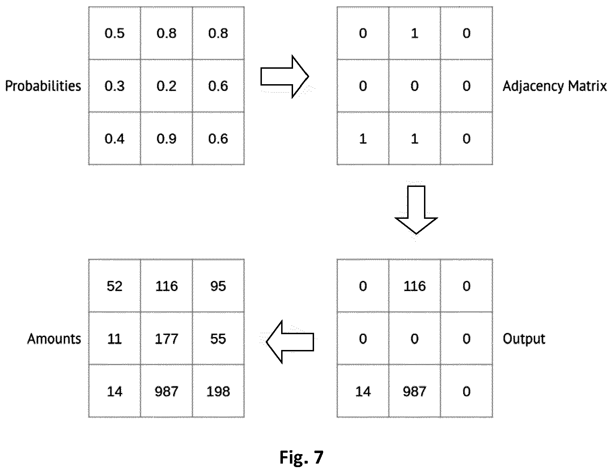

To generate money laundering operations with coordinated accounts without imposing local behaviour, the network is designed with a first set of fully connected layers that upscale the original input noise vector into a larger vector. Then it is reshaped to a tensor with one additional dimension than the target output tensor, specifically in our example, a 4D tensor of shape $(M, S + D, T_0, F)$, as exemplified in Figure 7. The first two dimensions already encode what is wanted to output, but the size of the third dimension is significantly smaller than what is wanted to generate. One can interpret each $(1, 1, 1, F)$ slice of this tensor as a feature vector of length $F$ encoding the interactions between a pair of accounts in a time window spanning several days of the final output. This provides a coarse temporal representation of the behaviour of accounts to be refined in subsequent layers.

The second block of the network is responsible for gradually increasing the time granularity of the tensor created in the first block. To do this, transposed convolutional layers are used with filters that slide across the time dimension and encompass all features of the previous layers.

In transaction networks, each account only sends/receives money to/from a very limited number of accounts compared to the total number of people in the network. It is not expected that every account sends/receives money daily to/from every other account. As such, if one uses the disclosed 3D tensor representation for the transactions, the tensor should be very sparse, with the great majority of entries being 0.

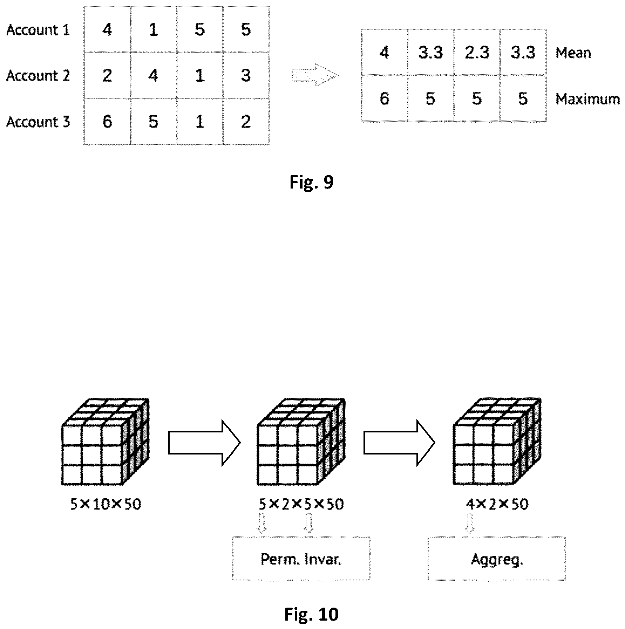

To enforce this sparsity, some of the entries in the tensor are randomly sampled to contain a transaction. This can be achieved, for example, by branching the output tensor from the previous stage into two tensors: one to contain the amounts of each potential transaction and another to contain the probability of the corresponding transactions occurring, see example in Figure 9. Each branch has its own transposed convolutional layers to allow some independence between the probability and the amount of each transaction. Also, the last layer maps the tensors that have one extra dimension, 4D in the example, into the final tensor shapes, respectively, 3D, consistent with the target output, i.e., the additional dimension is collapsed, one with the amount of information and the other with the probability. The last activation function of the amount tensor is the $Softplus(x) = \log(e^x + 1)$, which is very similar to the $ReLU = \max(0, x)$ function already mentioned but is always strictly greater than 0, a desired property for the entries of the amount tensor. The last activation function of the probability tensor is a $Sigmoid = 1/(1 + e^{-x})$, to ensure that the result is a value between 0 and 1.

The categorical sampling step is done via Bernoulli sampling on the probability tensor, where each of the entries becomes 1 with probability as given by the entry in the tensor and 0 otherwise. Then, to select the corresponding amounts to obtain the final output of the generator, the Bernoulli sampled tensor is multiplied element-wise by the amount tensor; see the example in Figure 10. The backpropagation step is then performed on the probabilities themselves because the Bernoulli sampling is not differentiable [7].

This approach not only solves the problem of making the output tensor very sparse but also introduces some randomness, ergo some variability, to the generated data and allows to sample transactions with probability somewhat independent from the amount, e.g., transactions with a low amount and high probability or vice-versa.

The discriminator consists of a deep learning model that classifies transactions as real, i.e., from a real dataset, or synthetic, i.e., from the generator. During training, it is fed both types of instances and, as such, sampling transactions from our real dataset is necessary.

For the case of AML, the main restriction is that samples should come from the real distribution of transactions and be small enough to fit in the present data representation. However, in typical applications, one does not want to make it too easy for the discriminator to distinguish between real and synthetic data, e.g., sampling a small number of low-amount transactions is not ideal since this is the opposite of the expected behaviour for the objective for the generated data.

Another desirable property is that all accounts in each of our internal and external samples belong to the same connected component.

Three possible different sampling methods that were tested in an experimental study are described. These are merely examples, and other sampling methods can be chosen.

The first method is a simple random walk. The only restriction is that the number of source, internal, and destination accounts cannot become larger than the maximum size allowed by the data representation. So, in each step of the random walk, when selecting the next node to jump to among the neighbours of the current node, nodes that do not already belong to the sample are ignored if they belong to a set that has already been filled. For example, if a node is a source account that does not belong to the sample yet, but has already reached the maximum number of source accounts that fit in the data representation, it is not considered a candidate for which to jump next. One stops sampling nodes when (1) it is reached a predetermined maximum number of jumps or (2) the sample has the maximum number of source, internal and destination accounts that fit in the data representation.

The second method is to follow the order of a breadth-first search. To build each sample, one starts in a seed node selected at random and fills a queue with its neighbours. Then, the front of the queue is popped to select the next node to add to the sample and insert its unseen neighbours on the queue. Here, the same restriction applies: one does not want more than the maximum number of source, internal, and destination accounts, so every time that one pops or is about to insert a node in the queue belonging to an already filled set, it is ignored. One stops sampling nodes when (1) the queue is empty or (2) our sample has the maximum number of source, internal and destination accounts that fit in the data representation.

A third option is to do community detection on the graph of transactions. A hierarchical clustering algorithm can be used to extract communities that fit inside the data representation. If it is of the agglomerative type, one starts from a seed node and stops before its cluster becomes too large to fit inside the data representation. If it is divisive, the seed node starts in the same cluster as every other node, so one stops once its cluster becomes small enough to fit inside the data representation. In the end, it just needed to verify that the cluster still represents a tripartite graph, with at least one node in each of the three sets. This cluster becomes the sample.

**Figure 7** shows a schematic representation of an embodiment of the categorical sampling operation.

The sampling strategy and the generator architecture discussed previously provide the required input for the discriminator, which now is described. A further goal of this machine learning model component is to complement the traditional rules-based AML system. Since in the AML example the generator is trained to create transactions that launder as much money as possible without triggering the rules, its outputs can be used as positive instances of money laundering. Using the previously discussed sampling strategy, one can sample instances that fit within the data representation and use them as negative instances of money laundering. So, the discriminator is trained to solve a classification problem: given a set of transactions represented as previously described, which ones are money laundering and which ones are not.

The discriminator architecture is a slightly modified mirror image of the generator, still composed of three main blocks: (1) a block of convolutional layers, gradually reducing the temporal granularity of the interactions between accounts, (2) an aggregation step that will predict the discriminator permutation invariant concerning the order of the accounts, and (3) a block of dense layers, mapping the features extracted by the previous stages to a single output, the class prediction.

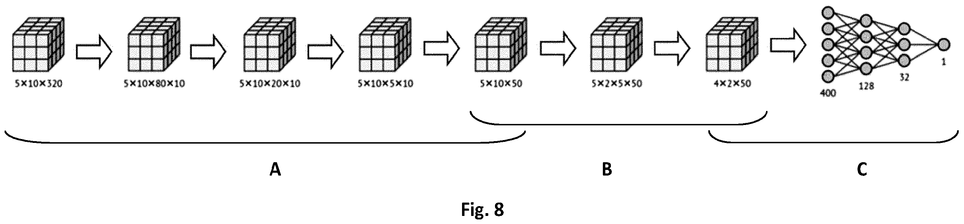

**Figure 8** shows a schematic representation of an embodiment of the full discriminator architecture, comprising a first stage of the discriminator (A) to decrease time granularity, a second stage of the discriminator (B) to enforce account permutation invariance, and a third stage of the discriminator (C) to map feature tensor to prediction.

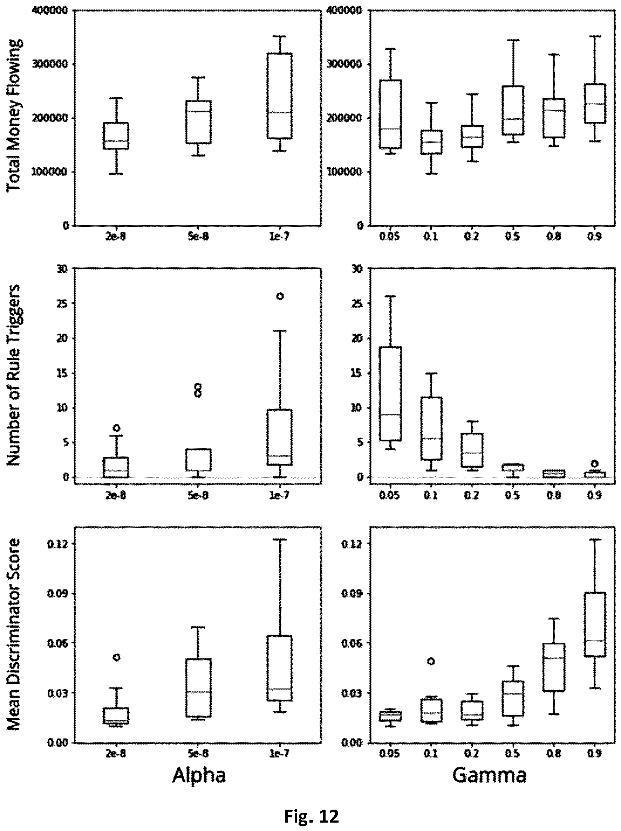

First, it is decreased the size of the time dimension in order to be less computationally intensive, using convolutional layers with filters that slide across the time dimension of the tensor, gradually shrinking this dimension's size. In order to increase expressivity, an additional dimension of fixed size is added to these intermediate tensors, similar to what was described in the generator's architecture, which then collapses at the end of this block; see the example in Figure 12. The result, in this example, is a 3D tensor where the first dimension runs over internal accounts, and the second dimension runs over external accounts. A (1, 1, *X*) slice of the tensor can be seen as a feature vector that is encoding the behaviour of transactions between the corresponding pair of accounts.

One desirable property for the disclosed discriminator is that it must be permutation invariant concerning the order of the entities. Only the topology of the graph and the amounts transacted at the edges is relevant. Thus, the ordering of the internal accounts in the tensor is arbitrary. The same can be said of the external accounts in the second dimension, with the remark that one can only swap source accounts with other source accounts, in the first half of this dimension, and destination accounts with other destination accounts, the second half of this dimension, since they represent different types of counterparties of the internal accounts. In contrast, the order of the entries in the time dimension of the original input tensor is very important, since the order of the entries maps directly to the passage of time, and seasonality or local behaviours may exist.

**Figure 9** shows a schematic representation of an embodiment of the permutation invariant aggregation.

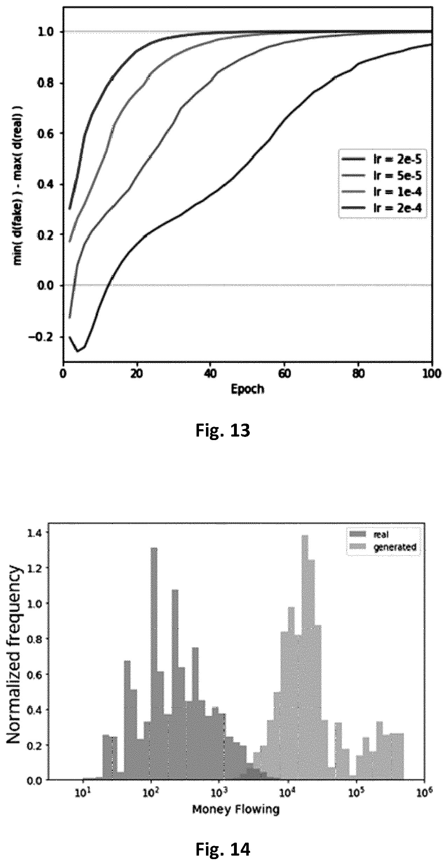

After the decrease in time granularity there is one feature vector representing the transactions between each pair of accounts. Next, the second dimension is split into two parts: one regarding the transactions from source accounts, and one regarding the transactions to destination accounts, see example in Figure 14. In this example, a 4D tensor is obtained where the dimensions one wants to be permutation invariant are the first, internal, and the third external. Then, any number of commutative functions can be applied to aggregate these dimensions into features, for example, the maximum, minimum, mean, standard deviation; see the example in Figure 13. The result is a 3D tensor where the first dimension relates to the aggregations that were used. For example, using the mean and maximum as aggregation functions would lead to a first dimension of size 2, where the first index would contain the mean of value over all accounts and the second index would contain the maximum. The second dimension of size 2 corresponds to the type of transaction, incoming or outgoing from the point of view of the internal accounts. And in the third dimension, there are the features that were extracted from the tensor.

**Figure 10** shows a schematic representation of an embodiment of the second stage of the discriminator: enforcing account permutation invariance.

Lastly, this tensor is reshaped, which can already be made significantly smaller than the input, into a 1D vector of features and use a set of dense layers to make the final prediction of the discriminator. If the goal is to make a binary classification of the input tensor, using the cross-entropy loss, the last activation function can be a sigmoid, meaning that the output of the discriminator will be a value between 0 and 1.

Previously it was described the data representation as well as all the function parameterizations required by the disclosed system. Now, it is discussed the various optimization objectives and how they fit together.

In the case of a rule-based AML system, the goal of the generator may be to avoid the rule-based AML system but also to mimic money laundering. In the specific example of layering, this means creating money flows with a specific classical pattern used by mule accounts: they receive large volumes of money through the financial system and subsequently send it again in order to hide its illicit origins. Also, it is known, from consulting with domain experts, that money launderers do not usually leave much money in the internal account for a long time because the faster the money gets to its final destination, the less likely it is for it to be apprehended. Furthermore, since, in this example, deposits and withdrawals are not considered, the amount of money that an internal account sends should not be much bigger than what it receives. Because of these two facts, the goal is not only to maximize the amount of money flowing, but also to minimize the amount of money blocked, transferred from a source to the internal account and then not leaving, and created, an internal account sending much more money than what it receives.

It is assumed that a mule's objective is to maximize the money flowing while minimizing the money blocked or created, as defined in the previous paragraph. Defining as *x* the total amount of money incoming to an internal account and the outgoing money as $y$ , then one way to formalize this objective is maximizing the function:

$$\Lambda_{\text{flow}}(x, y) = x + y - \beta \left| x - y \right| \tag{3}$$

The term (*x* + *y*) is responsible for maximizing the amount flowing, while the term |*x* - *y*| attempts to minimize the amount of money blocked and created. The parameter $\beta$ controls the relative strength of the balancing term. Another example with a similar effect is the function $\Lambda_{flow}(x, y) = \sqrt{xy}$ .

The money laundering objective is used to measure the money laundering quality of the example and the proxy network in place of the rule base AML system to detect the triggers. So, in other words, the generator should be trained to maximize the money laundering objective, e.g., Eq. 3, while minimizing the predicted label of the proxy network. These two loss functions are adversarial in nature, in the sense that the money laundering objective will push the generator towards the opposite behaviour compared to the proxy network loss. A hyperparameter $\alpha$ can be used to balance the strength of these two loss functions. As such, the generator will be trained to minimize the loss function:

$$\Lambda = (1 - \alpha)\Lambda_{\text{proxy}} - \alpha\Lambda_{\text{flow}} \cdot \quad (4)$$

$\Lambda_{\text{flow}}$ stands for the loss from the money laundering objective function, e.g., the output of the function from Eq.3. $\Lambda_{\text{proxy}}$ stands for the loss from the proxy network, which is dependent on the version of the proxy network. If the fully learnable or semi-learnable versions are used, where the last activation function is a Sigmoid, then the loss is the binary cross entropy $BCE(x,y) = -y \log(x) - (1 - y) \log(1 - x)$, where $x$ is the predicted value and $y$ is the target label. Here the proxy output $x = \text{proxy}(G(z))$ is interpreted as the probability of the instance triggering the rules, so the target label of the generator is $y = 0$, i.e., the rules are never triggered. Thus, in this case, the proxy loss simplifies $\Lambda_{\text{proxy}}(G(z)) = - \log(1 - \text{proxy}(G(z)))$. If the fully manual version is used, where the last activation function is a ReLU, then the loss can be the output of the proxy network, thus achieving a similar objective.

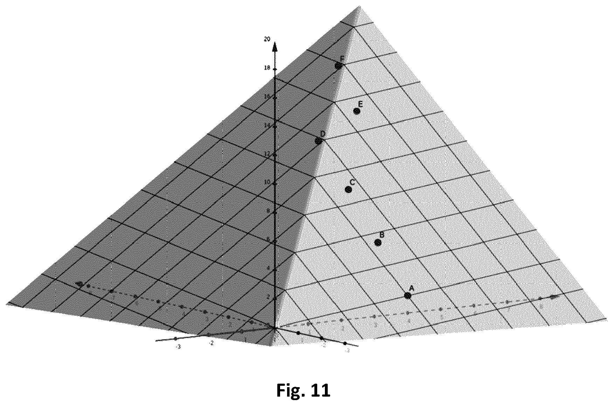

**Figure 11** shows, purely as an illustrative example, a schematic representation of an embodiment of the expected learning trajectory given the $\Lambda_{\text{flow}}(x,y)$ objective function.

Similarly to conventional GANs, the discriminator's main objective is to discriminate between real and generated data. A possible loss function is thus, the binary cross entropy loss already introduced previously, Eq. (2). The goal of the discriminator is to maximize the discriminative power, so the first term maximised the probability of assigning a positive label to real examples, and the second one maximizes the probability of assigning a negative label to generated samples. The generator is focusing on the opposite objective of confusing the discriminator, i.e., to minimize these quantities. In practice, for example, the training of the disclosed system may alternate between adjusting the generator and adjusting the discriminator. If the discriminator is fixed, the second term of the objective function can be assigned to a third money laundering objective for the generator, whereas if the generator is fixed, the full GAN loss is needed to train the discriminator. Other losses that are used for GANs, such as the Wasserstein loss [8], can be used instead of the binary cross entropy.

On the iterations where the discriminator is fixed, as discussed previously, a new term in the loss function is included, corresponding to the discrimination loss for the generator. A hyperparameter $\alpha$ is introduced to balance the strength of the money laundering flow objective relative to the losses from the AML system, rules proxy, and discriminator, while a new hyperparameter $\gamma$ regulates the relative importance given to the losses due to the rules proxy network and the discriminator. As such, the generator is trained to minimize the loss function:

$$\Lambda = (1 - \alpha)(\gamma\Lambda_{\text{proxy}} + (1 - \gamma)\Lambda_{\text{disc}}) - \alpha\Lambda_{\text{flow}} \cdot \quad (5)$$

$\Lambda_{\text{disc}}$ stands for the loss from the discriminator, which can also be chosen according to the type of GAN that is used. If the original GAN loss is used, $\Lambda_{\text{disc}}(G(z)) = - \log(1 - D(G(z)))$.

The proposed system can be optimized in various ways. One possibility is to first train only the generator using the illicit activity objective and optionally the pre-existing system. The discriminator is then trained while keeping the generator fixed. This process can be iterated multiple times, where each iteration refines the generator and discriminator separately. Another possibility is to optimize the generator and discriminator jointly, similar to GAN training. How close the generator converges to the real data and, consequently, how confident the discriminator is of its prediction depends on the choice of hyperparameters $\alpha$ and $\gamma$.

Results from experiments in the AML use-case applied to a real-world banking dataset are presented. The inputs are represented using a tensor representation as mentioned earlier. The generator and discriminator architectures, as discussed earlier, are optimized jointly. A proxy network for an existing AML rules system is implemented using the fully manual approach discussed earlier. A grid search over various hyperparameters is performed to find the best settings (in this example, the metric used is to move as much money as possible through internal accounts without triggering any rule).

**Figure 12** shows, purely as an illustrative example, a graphic representation of the results from the grid search of improved generator's hyperparameters.

In order to mimic the adaptive behaviour of the money launderers to a new AML solution, the upon the first generator was improved by taking into account the added goal of avoiding triggering the discriminator. That is, the goal here is to train a generator that is capable of fooling the first discriminator, as well as the rules system. During this experiment, the parameters of the discriminator were fixed, i.e., the discriminator is not re-trained to adapt to the generator's behaviour.

Using the parameters of the first generator as initial parameters for the neural network, it was proceeded with the training as before. Most of the hyperparameters were fixed to be the same as the ones used to train the first generator, namely: batch size is set to 16, $\beta$ is set to 0.9, the scaling factor is set to 100, the learning rate is set to $5 \times 10^{-5}$, and the proxy_min version of the proxy network was used.

Grid search was performed over various values of $\alpha$ and $\gamma$, and measure how these hyperparameters affect the total amount of money flowing through the internal accounts in the generated samples, as well as the number of rule triggers and the mean score attributed by the discriminator. 2 runs were performed for each combination of hyperparameters, letting the generator train for 250 epochs. An epoch was defined as 16 batches. To evaluate the generator performance, it was measured how much money it was able to launder without triggering the rules in more than half of the generated examples and having an average discriminator score smaller than 0.08, the maximum discriminator score for real examples.

**Figure 13** shows, purely as an illustrative example, a graphic representation of the results from fine-tuning the discriminator with various values of learning rate. It shows the performance of the discriminator across the epoch of the training, for various values of learning rate. The performance is depicted as previously described, measuring the gap between the scores of the positive and negative classes. It is seen that the discriminator approaches a perfect model, requiring less epochs than before.

**Figure 14** shows the results for the generator of the best-performing system. The empirical distribution of money flowing through internal accounts for samples of real data, in a dark colour, and generated data, in light colour, is shown. The generated samples result in significantly higher money flows. None of the generated samples trigger existing rules.

A test set was prepared with samples from various trained generators and samples from real data. The detection of generated samples was investigated for a variety of trained discriminators, each trained with various hyperparameters during the grid search mentioned above.

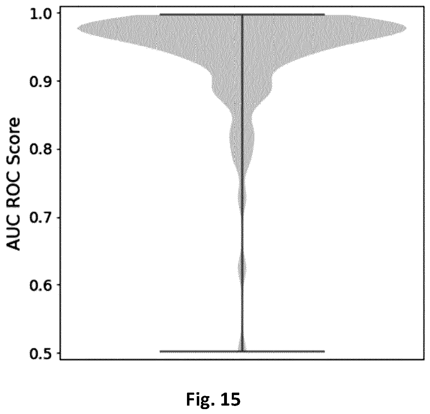

**Figure 15** shows the Area Under ROC (AUC) curve for these various discriminators on the test set. Many discriminators reach an AUC close to 1, indicating near-perfect performance.

The experimental study presented shows that given a fixed AML system in place, and a money laundering goal, it is possible to train a very good discriminator to differentiate between legitimate cases and cases that are generated to evade the AML system and maximise the money laundering objective, after training the generator using feedback from the AML system and the money laundering objective.

The term "comprising" whenever used in this document is intended to indicate the presence of stated features, integers, steps, and components, but not to preclude the presence or addition of one or more other features, integers, steps, components, or groups thereof.

The disclosure should not be seen in any way restricted to the embodiments described and a person with ordinary skill in the art will foresee many possibilities for modifications thereof. The above-described embodiments are combinable.

The following claims further set out particular embodiments of the disclosure.

References

[1] Ian Goodfellow, Jean Pouget-Abadie, Mehdi Mirza, Bing Xu, David Warde-Farley, Sherjil Ozair, Aaron Courville, and Yoshua Bengio. Generative adversarial nets. Advances in neural information processing systems, 27, 2014.

[2] R. Cory Watkins, Kenneth M. Reynolds, Ronald F. Demara, Michael Georgiopoulos, Avelino J. Gonzalez, and Ronald Eaglin. Tracking dirty proceeds: Exploring data mining technologies as tools to investigate money laundering. Police Practice and Research, 4:163 - 178, 2003.

[3] Brigitte Unger and Frans van Waarden. How to dodge drowning in data? rule- and risk-based anti-money laundering policies compared. Review of Law & Economics, 5:953 - 985, 2009.

[4] Zhiyuan Chen, Le Dinh Van Khoa, Ee Na Teoh, Amril Nazir, Ettikan Kandasamy Karuppiah, and Kim Sim Lam. Machine learning techniques for anti-money laundering (AML) solutions in suspicious transaction detection: a review. Knowledge and Information Systems, 57(2):245- 285, 2018.

[5] Joana Lorenz, Maria Inês Silva, David Aparício, João Tiago Ascensão, and Pedro Bizarro. Machine learning methods to detect money laundering in the bitcoin blockchain in the presence of label scarcity. arXiv preprint arXiv:2005.14635, 2020.

[6] Nair, Vinod & Hinton, Geoffrey. (2010). Rectified Linear Units Improve Restricted Boltzmann Machines Vinod Nair. Proceedings of ICML. 27. 807-814.

[7] Nicola De Cao and Thomas Kipf. Molgan: An implicit generative model for small molecular graphs. ArXiv, abs/1805.11973, 2018.

[8] Martin Arjovsky, Soumith Chintala, and Leon Bottou. Wasserstein generative adversarial networks. In International conference on machine learning, pages 214-223. PMLR, 2017.

**Claims**

1. Method for training a machine-learning discriminator for assessing transaction graph samples, according to a predetermined objective function, the method comprising the steps of:

   training a generator network to generate transaction graph samples that optimize the predetermined objective function;
   generating transaction graph samples using the generator network;
   sampling non-generated transaction graph samples from a dataset of real transaction graph samples and feeding to a discriminator network;
   feeding the generated transaction graph samples to the discriminator network;
   discriminating the transaction graphs fed to the discriminator network as generated or non-generated, by using the discriminator network;
   training the discriminator network to detect whether the transaction graphs fed to the discriminator network are generated or non-generated.

2. Method according to the previous claim, using a differentiable pre-existing transaction-graph sample assessment system, wherein the generator network is trained to generate transaction graph samples that optimize the predetermined objective function and do not trigger detection by the differentiable pre-existing transaction-graph sample assessment system.

3. Method according to any of the previous claims wherein each transaction graph sample is a graph where graph nodes represent entities, graph edges between graph nodes represent transactions between entities, and each graph edge has an associated transactional amount which aggregates the transactional amount for zero or more transactions between two entities represented by graph nodes for a predetermined time period.

4. Method according to claim 3 wherein each transaction graph sample comprises a unipartite graph, comprising a single independent set of nodes, corresponding to transactional entities.

5. Method according to the previous claim wherein the unipartite graph is stored as a tensor data record, the tensor being at least three-dimensional, where a first dimension of the tensor comprises the transactional entities, a second dimension of the tensor also comprises the transactional entities, a third dimension is a time dimension, and each tensor value is the associated transactional amount which has been aggregated from corresponding values of said three dimensions.

6. Method according to claim 3 wherein each transaction graph sample comprises a bipartite graph, comprising two independent sets of nodes, a first set of nodes corresponding to a first set of transactional entities, and a second set of nodes corresponding to a second set of transactional entities.

7. Method according to the previous claim wherein the bipartite graph is stored as a tensor data record, the tensor being at least three-dimensional, where a first dimension of the tensor comprises the first set of transactional entities, a second dimension of the tensor comprises the second set of transactional entities, a third dimension is a time dimension, and each tensor value is the associated transactional amount which has been aggregated from corresponding values of said three dimensions.

8. Method according to the claim 3 wherein each transaction graph sample comprises a tripartite graph, comprising three independent sets of nodes, a first set of nodes corresponding to external source transactional entities, a second set of nodes corresponding to internal transactional entities, and a third set of nodes corresponding to external destination transactional entities.

9. Method according to the previous claim wherein the tripartite graph is stored as a tensor data record, the tensor being at least three-dimensional, where a first dimension of the tensor comprises the internal transactional entities, a second dimension of the tensor comprises the external source and destination transactional entities, a third dimension is a time dimension, and each tensor value is the associated transactional amount which has been aggregated from corresponding values of said three dimensions.

10. Method according to the previous claim wherein the external source transactional entities and the external destination transactional entities of the second dimension of the tensor are non-overlapping in said second dimension.

11. Method according to any of the claims 5, 7, 9 or 10 wherein the time dimension is discretized according to a predetermined time duration, wherein the time dimension is split into non-overlapping contiguous time periods of said time duration.

12. Method according to the previous claim wherein the predetermined time duration is the smallest time unit present in rules of the existing rule-based system.

13. Method according to any of the claims 5, 7, 9-12, wherein generating transaction graph samples using the generator network, comprises the steps of:

   inputting a one-dimensional source of random noise;
   upscaling the random noise input using a set of fully connected neural network layers into a one-dimensional upscaled random noise input;
   reshaping the one-dimensional upscaled random noise input into a coarse temporal tensor having an additional dimension than the graph tensor;
   applying to the coarse temporal tensor a set of transpose convolutional layers having transposed convolutional filters which are slidable across the time dimension for gradually obtaining a tensor with increased time granularity over the time dimension;
   removing the additional dimension by aggregating along the additional dimension of the tensor with increased time granularity into a generated tensor having the same dimensions as the graph tensor.

14. Method according to the previous claim, further comprising, for transaction sparsifying when collapsing the additional dimension, the steps of:

   branching the tensor with increased time granularity into a probability tensor and an amount tensor;
   applying to the probability tensor and an amount tensor a set of transposed convolutional layers having transposed convolutional filters which are slidable across the time dimension for gradually obtaining a probability tensor and an amount tensor with increased time granularity over the time dimension;
   collapsing the additional dimension of the probability and the amount tensor with increased time granularity into a probability and an amount tensor having the same dimensions as the graph tensor;
   sampling the collapsed probability tensor where sampled tensor values are assigned the value of one with a probability defined by the respective tensor value in the collapsed probability tensor, and are otherwise assigned the value of zero;
   multiplying the sampled tensor values by corresponding amounts from the collapsed amount tensor into a generated tensor.

15. Method according to any of the claims 5, 7, 9-14, where discriminating the transaction graphs fed to the discriminator network as generated or non-generated, by using the discriminator network, comprises the steps of:

   applying to a fed transaction graph tensor a set of convolutional layers having convolutional filters which are slidable across the time dimension for gradually obtaining a tensor with decreased time granularity over the time dimension;
   adding an additional dimension to the fed transaction graph tensor by a layer of said set of convolutional layers;
   collapsing the additional dimension of the tensor with decreased time granularity into a collapsed tensor having the same dimensions as the graph tensor;
   applying a permutation invariant aggregation to the collapsed tensor in respect of an order of one or more of the transactional entity dimensions;
   reshaping the permutation invariant aggregated tensor into a one-dimensional feature vector;
   using a set of fully connected neural network layers for predicting whether the fed transaction graphs is generated or non-generated.

16. Method according to any of the claims 5, 7, 9-15, where sampling a non-generated transaction graph sample from the dataset of real transaction graph samples comprises random walking said dataset by the steps of:

   selecting a random seed node from the dataset of real transaction graph samples and adding the random seed node to the non-generated transaction graph sample;
   repeatedly, selecting a neighbouring node of the currently selected node as a newly selected node, and adding the newly selected node to the non-generated transaction graph sample, except if a tensor dimension of the non-generated transaction graph sample corresponding to the neighbouring node is already complete.

17. Method according to any of the claims 5, 7, 9-16, where sampling a non-generated transaction graph sample from the dataset of real transaction graph samples comprises a breadth-first search of said dataset by the steps of:

selecting a random seed node from the dataset of real transaction graph samples as a currently selected node; repeatedly, adding neighbouring nodes of the currently selected node to the back of a queue, removing a node from the front of the queue, selecting the removed node as the currently selected node, and adding the newly selected node to the non-generated transaction graph sample, except if a tensor dimension of the non-generated transaction graph sample corresponding to the neighbouring node or corresponding to the removed node is already complete.

18. Method according to any of the claims 5, 7, 9-17, where sampling a non-generated transaction graph sample from the dataset of real transaction graph samples comprises a community detection algorithm, such as hierarchical clustering agglomerative algorithm by the steps of:

selecting a random seed node from the dataset of real transaction graph samples and growing a cluster of nodes from the dataset of real transaction graph samples as the non-generated transaction graph sample until any of the tensor dimension of the non-generated transaction graph sample is complete;

or such as a hierarchical clustering divisive algorithm, by the steps of:

selecting a random seed node and a corresponding cluster of subgraph connected nodes from the dataset of real transaction graph samples; thinning the cluster of nodes from the dataset of real transaction graph samples as the non-generated transaction graph sample until all of the tensor dimensions of the non-generated transaction graph sample are complete or less.

19. Method according to any of the claims 2-18 wherein transactions between internal transactional entities are disregarded in the aggregated transactional amount.

20. Method according to any of the claims 2-19 wherein the transactional amount is aggregated using a sum and/or an average and/or a count of transactional amounts of individual transactions.

21. Method according to any of the claims 2-20 wherein the differentiable pre-existing transaction-graph sample assessment system is a differentiable neural network proxy of a pre-existing rule-based transaction-graph sample assessment system.

22. Method according to any of the previous claims wherein the training of the generator network and the training of the discriminator network is carried out in parallel or is carried out in sequence, or is carried out iteratively in parallel or in sequence.

23. A computer program product embodied in a non-transitory computer-readable medium comprising computer program instructions, which when executed by a computer processor, cause the computer processor to carry out the method for training a machine-learning discriminator of any of the claims 1-22.

24. A computer system comprising a computer processor, configured to carry out the method for training a machine-learning discriminator of any of the claims 1-22.

25. A computer program product embodied in a non-transitory computer-readable medium comprising computer program instructions, which when executed by a computer processor, cause the computer processor to carry out a machine-learning discriminator trained by the method of any of the claims 1-22.

Fig. 1

A

Day 1

Day 2

B

C

**Fig. 2**

EP 4 160 482 A1

A

B

C

Fig. 3

21

S   M   D

α  A  γ

β  B  δ

**A**

| | α | β | γ | δ | |
|---|---|---|---|---|---|
| A | 3.14 | 89.79 | | | Day 1 |
| B | 65.35 | | 43.38 | | |
| A | 15.92 | | 46.26 | | Day 2 |
| B | | | | 83.07 | |

α  β  γ  δ

**B**

M

S  D  T

**C**

**Fig. 4**

Amount    Sum of amounts
          per week

Amount    Sum of amounts
          per week

Amount    Sum of amounts
          per week

**Fig. 5**

**Fig. 6**

Probabilities

| 0.5 | 0.8 | 0.8 |
| 0.3 | 0.2 | 0.6 |
| 0.4 | 0.9 | 0.6 |

Adjacency Matrix

| 0 | 1 | 0 |
| 0 | 0 | 0 |
| 1 | 1 | 0 |

Amounts

| 52 | 116 | 95 |
| 11 | 177 | 55 |
| 14 | 987 | 198 |

Output

| 0 | 116 | 0 |
| 0 | 0 | 0 |
| 14 | 987 | 0 |

Fig. 7

Fig. 8

5×10×320  5×10×80×10  5×10×20×10  5×10×5×10  5×10×50  5×2×5×50  4×2×50

400  128  32  1

A          B          C

EP 4 160 482 A1

| | | | | |
|---|---|---|---|---|
| Account 1 | 4 | 1 | 5 | 5 |
| Account 2 | 2 | 4 | 1 | 3 |
| Account 3 | 6 | 5 | 1 | 2 |

| | | | | |
|---|---|---|---|---|
| 4 | 3.3 | 2.3 | 3.3 | Mean |
| 6 | 5 | 5 | 5 | Maximum |

**Fig. 9**

$5 \times 10 \times 50$    $5 \times 2 \times 5 \times 50$    $4 \times 2 \times 50$

Perm. Invar.    Aggreg.

**Fig. 10**

Fig. 11

**Fig. 12**

Fig. 13

Fig. 14

**Fig. 15**

Europäisches
Patentamt

European
Patent Office

Office européen
des brevets

# EUROPEAN SEARCH REPORT

**Application Number**

EP 22 19 0147

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN ZHIYUAN ET AL: "Variational Autoencoders and Wasserstein Generative Adversarial Networks for Improving the Anti-Money Laundering Process", IEEE ACCESS, IEEE, USA, vol. 9, 4 June 2021 (2021-06-04), pages 83762-83785, XP011860600, DOI: 10.1109/ACCESS.2021.3086359 [retrieved on 2021-06-13] * Introduction, Section III C, Section III D, Section IV C, Section IV E 3, Conclusion * | 1-25 | INV. G06N3/04 G06N3/08 G06N5/046 G06Q20/40 |
| X,D | NICOLA DE CAO ET AL: "MolGAN: An implicit generative model for small molecular graphs", ARXIV.ORG, CORNELL UNIVERSITY LIBRARY, 201 OLIN LIBRARY CORNELL UNIVERSITY ITHACA, NY 14853, 30 May 2018 (2018-05-30), XP080883898, * Section 1, Section 3 * | 1-25 | |
| A | KURSHAN EREN ET AL: "Financial Crime & Fraud Detection Using Graph Computing: Application Considerations & Outlook", 2020 SECOND INTERNATIONAL CONFERENCE ON TRANSDISCIPLINARY AI (TRANSAI), IEEE, 21 September 2020 (2020-09-21), pages 125-130, XP033857695, DOI: 10.1109/TRANSAI49837.2020.00029 [retrieved on 2020-11-09] * Section I, Section II B * | 1-25 | TECHNICAL FIELDS SEARCHED (IPC) G06N G06Q |

-/--

The present search report has been drawn up for all claims

| Place of search | Date of completion of the search | Examiner |
|---|---|---|
| The Hague | 5 January 2023 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 160 482 A1**

| Application Number |
|---|
| EP 22 19 0147 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARK WEBER ET AL: "Scalable Graph Learning for Anti-Money Laundering: A First Look", ARXIV.ORG, CORNELL UNIVERSITY LIBRARY, 201 OLIN LIBRARY CORNELL UNIVERSITY ITHACA, NY 14853, 30 November 2018 (2018-11-30), XP081042700, * Section 2.2 * | 1-25 | |

TECHNICAL FIELDS
SEARCHED (IPC)

The present search report has been drawn up for all claims

| Place of search | Date of completion of the search | Examiner |
|---|---|---|
| The Hague | 5 January 2023 | Tidriri, Khaoula |

## REFERENCES CITED IN THE DESCRIPTION

**Non-patent literature cited in the description**

- **IAN GOODFELLOW ; JEAN POUGET-ABADIE ; MEHDI MIRZA ; BING XU ; DAVID WARDE-FARLEY ; SHERJIL OZAIR ; AARON COURVILLE ; YOSHUA BENGIO.** Generative adversarial nets. *Advances in neural information processing systems,* 2014, 27
- **R. CORY WATKINS ; KENNETH M. REYNOLDS ; RONALD F. DEMARA ; MICHAEL GEORGIOPOULOS ; AVELINO J. GONZALEZ ; RONALD EAGLIN.** Tracking dirty proceeds: Exploring data mining technologies as tools to investigate money laundering. *Police Practice and Research,* 2003, vol. 4, 163-178
- **BRIGITTE UNGER ; FRANS VAN WAARDEN.** How to dodge drowning in data? rule- and risk-based anti-money laundering policies compared. *Review of Law & Economics,* 2009, vol. 5, 953-985
- **ZHIYUAN CHEN ; LE DINH VAN KHOA ; EE NA TEOH ; AMRIL NAZIR ; ETTIKAN KANDASAMY KARUPPIAH ; KIM SIM LAM.** Machine learning techniques for anti-money laundering (AML) solutions in suspicious transaction detection: a review. *Knowledge and Information Systems,* 2018, vol. 57 (2), 245-285
- **JOANA LORENZ ; MARIA INÊS SILVA ; DAVID APARÍCIO ; JOÃO TIAGO ASCENSÃO ; PEDRO BIZARRO.** Machine learning methods to detect money laundering in the bitcoin blockchain in the presence of label scarcity. *arXiv preprint arXiv:2005.14635,* 2020
- **NAIR, VINOD ; HINTON, GEOFFREY.** Rectified Linear Units Improve Restricted Boltzmann Machines Vinod Nair. *Proceedings of ICML,* 2010, vol. 27, 807-814
- **NICOLA DE CAO ; THOMAS KIPF. MOLGAN.** An implicit generative model for small molecular graphs. *ArXiv, abs/1805.11973,* 2018
- **MARTIN ARJOVSKY ; SOUMITH CHINTALA ; LEON BOTTOU.** Wasserstein generative adversarial networks. In International conference on machine learning. *PMLR,* 2017, 214-223